# EUROPÄISCHE PATENTSCHRIFT

(11) **EP 3 092 089 B1**
(45) Veröffentlichungstag und Bekanntmachung des Hinweises auf die Patenterteilung: **20.12.2017**
(21) Anmeldenummer: 15708692.7
(22) Anmeldetag: 08.01.2015
(51) Int. Cl.: B21D 5/00, B21D 5/02, G01B 7/24, G01B 7/30

(54) **UNTERWERKZEUG EINER BIEGEPRESSE MIT EINER BIEGEWINKELMESSVORRICHTUNG**
LOWER TOOL OF A BENDING PRESS HAVING A BEND ANGLE MEASURING APPARATUS
OUTIL INFÉRIEUR DE PRESSE PLIEUSE ÉQUIPÉ D'UN DISPOSITIF DE MESURE DE L'ANGLE DE PLIAGE

(30) Priorität: 09.01.2014 AT 500102014
(43) Veröffentlichungstag der Anmeldung: 16.11.2016
(73) Patentinhaber: TRUMPF Maschinen Austria GmbH & Co. KG., 4061 Pasching (AT)
(72) Erfinder: KNEIDINGER, Harald, 4063 Hörsching (AT)
(74) Vertreter: Burger, Hannes
(86) Internationale Anmeldenummer: PCT/AT2015/050004
(87) Internationale Veröffentlichungsnummer: WO 2015/103655

(56) Entgegenhaltungen:
- EP-A1- 1 066 893
- JP-A- H07 116 737
- JP-A- 2002 310 608
- JP-A- 2005 319 498
- JP-U- S59 120 016
- US-A- 5 295 385

## Beschreibung

Die Erfindung betrifft ein Unterwerkzeug einer Biegepresse mit einer Biegewinkelmessvorrichtung.

Beim Biegen von Blechteilen besteht eine große Herausforderung darin, den gewünschten Biegewinkel längs des zu biegenden Werkteils konstant einzuhalten. Der Biegedruck mit dem die Biegepresse das Oberwerkzeug gegen das zu biegende Werkteil und folglich in das Unterwerkzeug drückt, hängt im Wesentlichen von den Materialeigenschaften des umzuformenden Werkteils ab. Aufgrund von Schwankungen der Materialparameter des umzuformenden Blechteils, insbesondere der Blechdicke, wird der nach dem Modell ermittelte Pressendruck, gegebenenfalls für die aktuell durchzuführende Biegeumformung nicht korrekt sein und sich somit ein abweichender Biegewinkel einstellen.

Es ist daher von Vorteil, wenn der aktuell erreichte Biegewinkel bereits während der Durchführung der Biegeumformung ermittelt werden kann und somit direkt für die Steuerung des Biegevorganges herangezogen werden kann.

Diesbezüglich ist beispielsweise aus der DE 296 23 800 U1 eine Biegepresse bekannt, bei der im Oberwerkzeug Tastelemente vorgesehen sind, welche beim Biegevorgang am sich aufbiegenden Blech anliegen und durch das sich weiter aufbiegende Blech in ihrer Position bzw. Ausrichtung verschoben werden. Über eine Rückmelde- und Auswerteschaltung kann dieser Versatz in einen erreichten Biegewinkel umgesetzt werden.

Aus der EP 1 136 146 A1 ist ebenfalls ein Oberwerkzeug für eine Biegemaschine offenbart, welches ähnlich der vorgenannten Schrift, über Tastscheiben den sich einstellenden Biegewinkel ermittelt.

Aufgrund des Anliegens der Tastelemente auf der Blechoberfläche und der dadurch zwangsgeführten Bewegung der Tastelemente durch das sich aufbiegende Blechteil besteht stets die Gefahr, dass sich die Tastelemente an Störstellen der Oberflächen verhaken und somit durch das sich weiter aufbiegende Blech beschädigt werden. Ferner sind aufgrund der erforderlichen Umlenkung der Aufbiegung des Blechteils in einen meistens vertikalen Versatz, teilweise recht komplexe mechanische Umlenksysteme erforderlich. Diese sind einerseits fertigungstechnisch anspruchsvoll und erfordern ferner eine sehr sorgfältige Handhabung beim Einsatz, um die teilweise recht empfindlichen Tastelemente bzw. die Umlenkmechanik nicht zu beschädigen.

Aus dem Stand der Technik sind ferner optisch wirkende Vorrichtungen zur Ermittlung des Biegewinkels bekannt. Beispielsweise zeigt die JP 2280920 A eine Biegemaschine, bei der eine Kamera mit ihrer optischen Achse in der Biegelinie bzw. parallel zu dieser ausgerichtet angeordnet ist und somit das stirnseitige Ende des umzuformenden Blechteils erfasst. Der Nachteil dieser Ausführung liegt darin, dass lediglich die Stirnseite des Blechteils erfasst wird, die Ermittlung des Biegewinkels längs des Biegeteils ist mit einer derartigen Ausführung nicht möglich.

JP 2005 319498 A offenbart ein Unterwerkzeug für eine Biegepresse mit zwei Biegewangen und ferner mit einer magnetischen Biegewinkelmessvorrichtung.

Die Aufgabe der Erfindung liegt nun darin, eine Biegewinkelmessvorrichtung für eine Biege presse zu schaffen, welche Biegewinkelmessvorrichtung sehr robust ausgeführt ist, um die Gefahr einer Beschädigung beim bestimmungsgemäßen Einsatz in der Biegepresse weitestgehend zu verhindern. Des Weiteren ist es Aufgabe der Erfindung, die Biegewinkelmessvorrichtung möglichst einfach auszubilden, insbesondere jedoch unter Vermeidung von komplexen Führungs- bzw. Umlenkmechaniken.

Die Aufgabe der Erfindung wird durch ein Unterwerkzeug einer Biegepresse mit einer Biegewinkelmessvorrichtung gelöst. Das Unterwerkzeug weist einen längserstreckten Grundkörper mit einer Maschinenaufnahme auf, ferner ist in Längserstreckung des Grundkörpers und der Maschinenaufnahme gegenüberliegend, eine Gesenkausnehmung angeordnet. Ferner sind in Längserstreckung zwei Biegewangen angeordnet, welche jeweils in einer Aufnahme des Grundkörpers gehalten sind und um eine, zur Längsachse parallelen Achse, zwischen einer Ruhe- und einer Arbeitsposition verschwenkbar sind. Ferner weist jede Biegewange eine Anlegefläche auf, welche in der Arbeitsposition mit einem Wandabschnitt der Gesenkausnehmung eine Gesenk-Anlegefläche ausbildet. Ferner ist zwischen jeder Biegewange und dem Grundkörper zumindest ein vorgespanntes Federelement angeordnet, wodurch die Biegewange in der Ruheposition gehalten ist und aus der Arbeitsposition selbsttätig in die Ruheposition zurückgeschwenkt wird. Das Federelement bildet eine Induktivität aus, welche in einem elektrischen Schaltkreis angeordnet ist. Der elektrische Schaltkreis ist mit einer Auswerteschaltung verbunden, welche Auswerteschaltung aus einer Änderung des Werts der Induktivität, eine Winkeländerung bildet.

Die Gesenkausnehmung ist bspw. als V- oder U-Nut ausgebildet und erlaubt somit im Fall einer V-Nut, die Bildung einer sehr scharfen Kante, im Fall einer U-Nut kann entsprechend der Rundung der U-Nut, eine entsprechende Rundung der Biegekante gebildet werden.

Das Verschwenken wird durch den in das Unterwerkzeug eintauchenden Biegestempel verursacht. Dem Fachmann ist bekannt, wie die Aufnahme ausgeführt sein kann, um ein derartiges, möglichst reibungsarmes Verschwenken zu gewährleisten. Die Federelemente sind jedenfalls ausreichend kräftig zu dimensionieren, um ein Zurückschwenken der Biegewangen nach Entlastung durch den zurückfahrenden Biegestempel zu gewährleisten.

Durch das Verschwenken der Biegewangen aufgrund der Aufbiegung des Bleches kommt es zu einer reversiblen Deformation der Federelemente. Diese Deformation führt aufgrund der Ausbildung der Federelemente als Induktivität, zu einer Änderung des Induktivitätswerts der Induktivität. Daher ist ein formelbasierter Bezug zwischen dem Biegewinkel bzw. dem halben Biegewinkel, und einem Induktivitätswert hergestellt. Somit kann durch Auswertung der Induktivitätsänderung auf den Biegewinkel rückgeschlossen werden.

Nach einer Weiterbildung ist vorgesehen, dass die Induktivität als Luftspule oder als Kernspule ausgebildet ist. Eine Luftspule entspricht im Wesentlichen einer Feder, insbesondere wenn die Luftspule einlagig ausgeführt ist. Somit ist dieses Bauteil in vorteilhafter Weise geeignet, eine entsprechende Federkraft zur Rückhaltung der Biegewange bereitzustellen und gleichzeitig durch die Wicklungen der Feder, eine Induktivität zu besitzen. Da eine Luftspule zumeist eine recht geringe Induktivität aufweist, kann im inneren Durchmesser ein Kern angeordnet sein, bevorzugt wird dies ein Nicht-Eisen-Kern sein.

Aufgrund der Platzverhältnisse im Bereich des Unterwerkzeugs werden die Federelemente zumeist recht klein ausgebildet sein, so dass die äquivalente Induktivität auch zumeist eher klein sein wird. Daher ist nach einer Weiterbildung vorgesehen, dass mehrere Federelemente je Biegewange vorhanden sind, wobei die Induktivitäten der Federelemente in Serie geschaltet sind.

Eine Weiterbildung besteht ferner darin, dass der elektrische Schaltkreis eine Wechselspannungsquelle oder Wechselstromquelle für sinusförmige oder für rechteckförmige Spannung bzw. Strom aufweist. Diese Weiterbildung hat den Vorteil, dass damit eine Mehrzahl unterschiedlich ausgebildeter elektrischer Schaltkreise mit entsprechender Messenergie beaufschlagt werden können.

Eine Weiterbildung besteht auch darin, dass die Auswerteschaltung eine Diskriminatorschaltung, insbesondere einen Fensterdiskriminator oder einen Phasendiskriminator, aufweist. Beispielsweise kann im elektrischen Schaltkreis ein Messwiderstand in Serie mit der Induktivität geschaltet sein und an diesen Kreis wird eine rechteckförmige Wechselspannung angelegt. Jede Anstiegs- bzw. Abfallflanke der rechteckförmigen Spannung führt zu einem exponentiell ansteigenden bzw. abfallenden Strom. Mittels eines Fensterdiskriminators kann nun die Spannung über dem Messwiderstand ausgewertet werden, um so die Zeitkonstante (Tau) dieses Anstiegs bzw. Abfalls zu ermitteln. Daraus lässt sich über die Formel Tau = L/R der Wert der Induktivität ermitteln. Bei Anlegen einer sinusförmigen Wechselspannung an eine Induktivität, kommt es aufgrund des komplexen Widerstands der Induktivität, an dieser zu einer Phasenverschiebung zwischen Strom und Spannung. Mittels eines Phasendiskriminator kann diese Phasenverschiebung ermittelt und somit ebenfalls auf die Induktivität rückgeschlossen werden.

Gemäß einer Weiterbildung ist die Wechselspannungsquelle in der Frequenz der sinusförmigen Spannungen durchstimmbar. Wenn der elektrische Schaltkreis als Schwingkreis ausgebildet ist, bspw. als RLC-Schwingkreis, hat dieser eine von den Bauteilwerten festgelegte Resonanzfrequenz. Ändert sich die Induktivität, ändert sich auch die Resonanzfrequenz. Durch Durchstimmen der anregenden Wechselspannung kann der Schwingkreis abgestimmt werden und somit wieder auf die Induktivität rückgeschlossen werden.

Da die Komponenten einer Biegepresse zumeist aus Metall gebildet sind, welches elektrisch leitend ist, ist gemäß einer Weiterbildung vorgesehen, dass das Federelement gegen den Grundkörper und/oder gegen die Biegewange elektrisch isoliert ausgebildet ist. Entsprechend der Ausführung der Aufnahme der Biegewanne kann bereits eine elektrische Isolation zwischen dem Grundkörper und der Biegewanne bestehen, dann ist lediglich eine Isolation des Federelements gegen den Grundkörper erforderlich.

Aufgrund von Erschütterungen beim Betrieb der Biegepresse und/oder durch die Verschwenkbewegung der Biegewange kann es vorkommen, dass sich einzelne Windungssegmente der Spule berühren und somit kurzschließen, was zu einem falschen Induktivitätswert und damit zu einem falschen Biegewinkel führen würde. Daher ist gemäß einer Weiterbildung vorgesehen, dass das Federelement elektrisch isolierend ausgebildet ist.

Da eine Induktivität durch umgebendes Metall beeinflusst wird, ist gemäß einer Weiterbildung vorgesehen, dass das Federelement von einem magnetischen Schirmelement umgeben ist. Somit kann der Einfluss der massiven Metallteile einer Biegepresse auf die Induktivität im Unterwerkzeug minimiert werden.

Da aufgrund der eher geringen Windungsanzahl eine Luftspule zumeist nur eine geringe Induktivität aufweisen wird, ist vorgesehen, dass am Grundkörper ein Umlenkmechanismus vorhanden ist, der die Verschwenkbewegung der Biegewange in eine Bewegung des Kerns in der Kernspule umsetzt. Somit kann bspw. die zumeist recht kleine Deformation des Federelements aufgrund der Verschwenkbewegung der Biegewange derart umgelenkt werden, dass eine deutlich größere Bewegung des Spulenkörpers in der Luftspule erreicht wird. Somit lässt sich eine stärkere Änderung der Induktivität erreichen.

Zum besseren Verständnis der Erfindung wird diese anhand der nachfolgenden Figuren näher erläutert.

Es zeigen jeweils in stark vereinfachter, schematischer Darstellung:
- Fig. 1: ein gegenständliches Unterwerkzeug mit Biegewinkelmessvorrichtung;
- Fig. 2: das gegenständliche Unterwerkzeug in der Arbeits- bzw. Ruheposition;

- Fig. 3: eine weitere mögliche Ausführungsvariante des gegenständlichen Unterwerkzeugs zur Erreichung einer stärkeren Induktivitätsänderung.

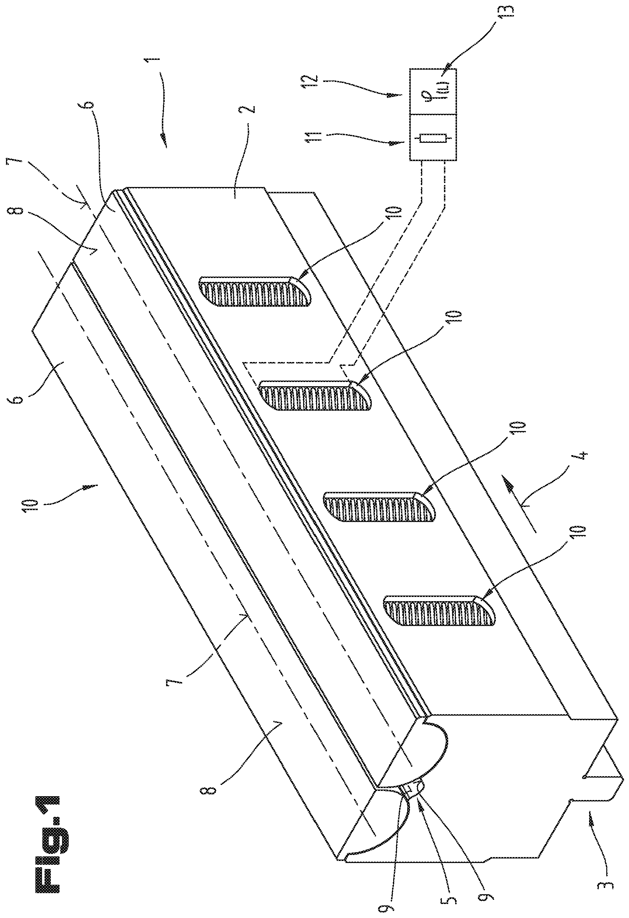

Fig. 1 zeigt ein gegenständliches Unterwerkzeug 1 einer nicht dargestellten Biegepresse. Das Unterwerkzeug 1 weist einen längserstreckten Grundkörper 2 mit einer Maschinenaufnahme 3 auf. In Längserstreckung 4 des Grundkörpers 2 und der Maschinenaufnahme 3 gegenüberliegend, ist eine Gesenkausnehmung 5 angeordnet. In Längserstreckung 4 und im Bereich der Gesenkausnehmung 5 sind ferner zwei Biegewangen 6 angeordnet, wobei die Biegewangen 6 jeweils um eine, zur Längserstreckung 4 parallelen Achse 7, zwischen einer Ruhe- und einer Arbeitsposition verschwenkbar sind. Jede der Biegewangen weist ferner eine Anlegefläche 8 auf, welche Anlegefläche 8 in der Arbeitsposition der Biegewange 6 zusammen mit jeweils einem Wandabschnitt 9 der Gesenkausnehmung 5 eine Gesenkanlegefläche ausbildet. Ferner ist zwischen jeder Biegewange 6 und dem Grundkörper 2 zumindest ein vorgespanntes Federelement angeordnet, welches die Biegewange 6, ohne Belastung durch den nicht dargestellten niederfahrenden Biegestempel, in der Ruheposition hält. Nach zurückfahren des Biegestempels und entfernen des gebogenen Blechteils, wird die Biegewange durch das vorgespannte Federelement zurück in die Ruheposition geschwenkt.

Da gemäß der gegenständlichen Ausführung zumindest ein Federelement 10 eine Induktivität ausbildet, ist in Fig. 1 ferner lediglich schematisiert dargestellt, dass diese Induktivität in einem elektrischen Schaltkreis 11 angeordnet ist. Der elektrische Schaltkreis 11 ist ferner mit einer Auswerteschaltung 12 verbunden, welche Auswerteschaltung 12 aus einer Änderung des Werts der Induktivität, eine Winkeländerung bildet. Durch die Änderung des Induktivitätswerts aufgrund einer Änderung der mechanischen Charakteristika des Federelements 10, wird sich zumindest eine elektrische Kenngröße des elektrischen Schaltkreises 11 ändern. Diese Änderung wird von der Auswerteschaltung 12 erfasst und mittels der Transferfunktion 13 in einen Winkelwert umgesetzt.

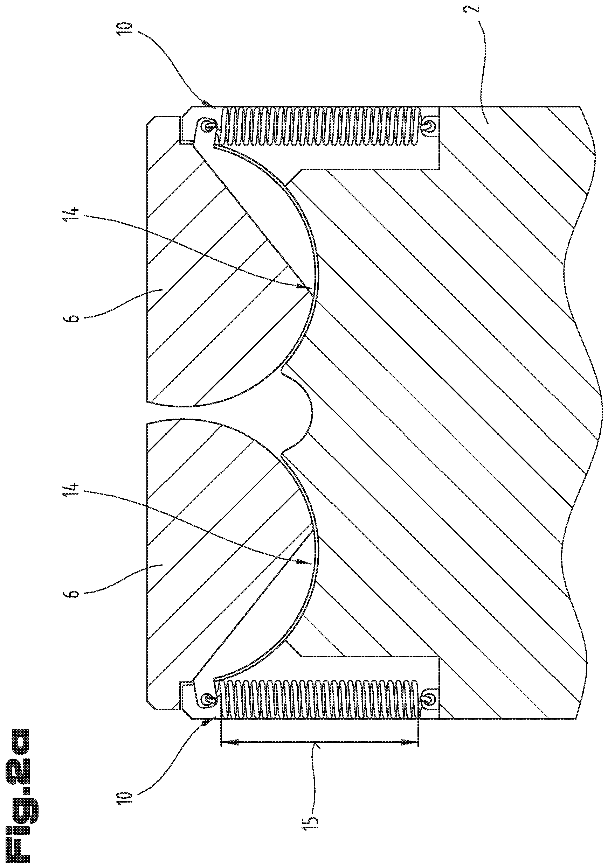

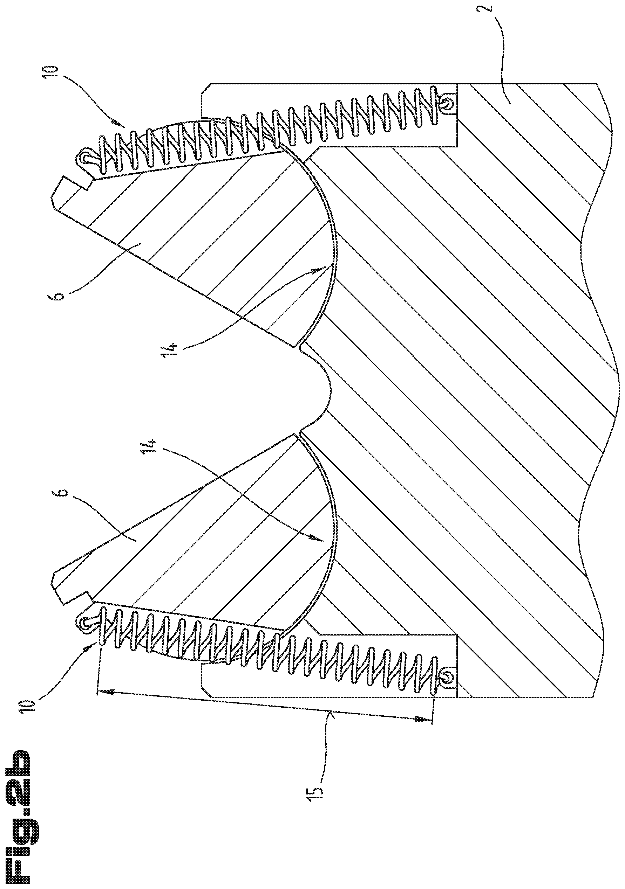

Die Fig. 2a und 2b zeigen schematisierte Detaildarstellungen des Unterwerkzeugs, mit dem Biegewangen in Ruhe und Arbeitsposition.

Fig. 2a zeigt die Situation in Ruheposition. Die beiden Biegewangen 6 sind in der Aufnahme 14 des Grundkörpers 2 gehalten, wobei zur Vereinfachung der Darstellung, mechanisch konstruktive Details der Aufnahme bzw. Halterung der Biegewangen 6 nicht dargestellt sind, da dies für die gegenständliche Beschreibung nicht von Bedeutung ist. Zwischen dem Grundkörper 2 und jeder Biegewange 6 ist jeweils ein Federelement 10 angeordnet, welches Federelement 10 im dargestellten Fall als Spiralfeder ausgebildet ist. Das Federelement 10 ist jeweils über Kontaktabschnitte mit der Biegewange 6 und dem Grundkörper 2 verbunden, wobei durch entsprechende Wahl der Federkenngrößen gewährleistet ist, dass bereits in der Ruheposition das Federelement 10 unter Vorspannung steht, sodass die Biegewange 6 in der Ruheposition gehalten wird.

Das Federelement 10 weist somit eine charakteristische Länge 15 auf, welche zusammen mit weiteren Kennparametern der Spiralfeder, wie beispielsweise Federdurchmesser und Windungszahl, als Induktivitätswert angeschrieben werden kann. Da der Grundkörper 2 und die Biegewangen 6 zumeist aus Metall gebildet sind, würde es bei Anordnung des Federelements 10 in einem elektrischen Schaltkreis zu einem Kurzschluss der Induktivität über die Metallteile kommen. Daher wird bevorzugt die Halterung des Federelements 10 an der Biegewange 6 und/oder die Halterung des Federelements am Grundkörper 2 elektrisch isolierend ausgebildet sein. Es ist jedoch auch möglich, dass die Endabschnitte des Federelements 10, welche in den Haltevorrichtungen aufgenommen sind, elektrisch isolierend ausgeführt sind. Wesentlich dabei ist, dass es durch die elektrisch leitenden Metallteile des Unterwerkzeugs zu keinem Kurzschluss der Induktivität des Federelements 10 kommt.

Fig. 2b zeigt das Unterwerkzeug in der Arbeitsposition der Biegewangen. Zur Vereinfachung der Darstellung ist weder das umgeformte Blech, noch der die Umformung durchführende Biegestempel dargestellt. Deutlich zu erkennen ist jedoch, dass es durch das Verschwenken der Biegewangen 6 auch zu einem Verschwenken der Haltevorrichtung des Federelements 10 an der Biegewange 6 kommt. Aufgrund dieses Verschwenkens ist es ferner nachvollziehbar, dass sich die Länge 15 des Federelements ändert. Da die restlichen Parameter des Federelements nicht ändern, von einer Einschnürung der Spiralfeder aufgrund der Längenänderungen wird hier nicht ausgegangen, wird sich die Induktivität des Federelements ändern, was von der Auswerteschaltung erkannt und in eine Winkeländerung transformiert wird.

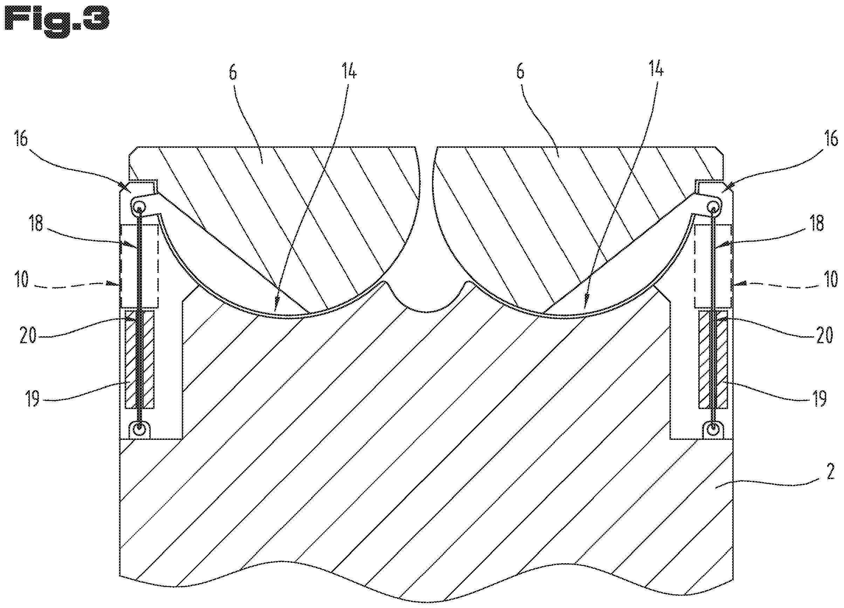

Fig. 3 zeigt eine weitere mögliche Ausführung des gegenständlichen Unterwerkzeuges mit dem eine stärkere Änderung des Induktivitätswerts in Abhängigkeit des Biegewinkels erreicht wird. Dabei ist vorgesehen, dass am Grundkörper 2 ein Umlenkmechanismus 16 vorgesehen ist, welcher über eine Bewegungsaufnahmevorrichtung 17 mit der Biegewange 6 bewegungsverbunden ist. Der Umlenkmechanismus 16 kann beispielsweise ein Zahnrad aufweisen, welches in eine entsprechend gegengleich ausgebildete Verzahnung der Bewegungsaufnahmevorrichtung 17 eingreift. Die Verschwenkbewegung der Biegewange 6 kann somit beispielsweise mittels eines Getriebes in eine lineare Bewegung umgesetzt werden, wobei durch Wahl der Getriebeübersetzung eine Wegverstärkung möglich ist. Vom Umlenkmechanismus 16 geht ein Führungselement 18 durch den inneren Freiraum des als Spiralfeder ausgebildeten Federelements 10, beispielsweise zum Verbindungspunkt des Federelements mit dem Grundkörper. Entlang dieses Führungselements 18 ist ein Kernelement 19 verschiebbar angeordnet und über ein Stellelement 20 mit dem Umlenkmechanismus verbunden. Bei Verschwenkung der Biegewange 6 wird das Kernelement 19 vom Umlenkmechanismus 16 mittels des Stellelements 20 nach oben, in den Windungsbereich der Spiralfeder, bewegt. Ein Kernelement, beispielsweise aus einem Ferritmaterial, oder einem beliebig anderem geeignetem Kernmaterial für Induktivitäten, bewirkt aufgrund des gegenüber Luft größeren µr-Wertes eine Steigerung der Spuleninduktivität.

Der besondere Vorteil des gegenständlichen Unterwerkzeugs liegt insbesondere darin, dass eine Winkelmessvorrichtung im Bereich des Unterwerkzeugs angeordnet ist, wodurch diese besonders einfach ausgeführt sein kann, da sich diese perfekt in das existierende Unterwerkzeug integrieren lässt. Insbesondere ist die Gefahr von Beschädigungen durch den Biegevorgang bzw. durch das Einlegen und Entnehmen des Biegeteils im Vergleich zu einer Anordnung einer Winkelmessvorrichtung im Biegestempel deutlich reduziert.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In der Fig. 3 ist eine weitere und gegebenenfalls für sich eigenständige Ausführungsform des Unterwerkzeugs gezeigt, wobei wiederum für gleiche Teile gleiche Bezugszeichen bzw. Bauteilbezeichnungen wie in den vorangegangenen Fig. lund 2 verwendet werden. Um unnötige Wiederholungen zu vermeiden, wird auf die detaillierte Beschreibung in den vorangegangenen Figuren hingewiesen bzw. Bezug genommen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus des Unterwerkzeugs diese bzw. deren Bestandteile teilweise unmaßstäblich und/oder vergrößert und/oder verkleinert dargestellt wurden.

### Bezugszeichenaufstellung

- 1: Unterwerkzeug
- 2: Grundkörper
- 3: Maschinenaufnahme
- 4: Längserstreckung
- 5: Gesenkausnehmung
- 6: Biegewange
- 7: Achse
- 8: Anlegefläche
- 9: Wandabschnitt
- 10: Federelement
- 11: elektrischer Schaltkreis
- 12: Auswerteschaltung
- 13: Transferfunktion
- 14: Aufnahme
- 15: Länge
- 16: Umlenkmechanismus
- 17: Bewegungsaufnahmevorrichtung
- 18: Führungselement
- 19: Kernelement
- 20: Stellelement

## Patentansprüche

1. Unterwerkzeug (1) einer Biegepresse mit einer Biegewinkelmessvorrichtung, wobei das Unterwerkzeug (1) einen längserstreckten Grundkörper (2) mit einer Maschinenaufnahme (3) aufweist, und wobei in Längserstreckung (4) des Grundkörpers (2) und der Maschinenaufnahme (3) gegenüberliegend, eine Gesenkausnehmung (5) angeordnet ist,
wobei ferner in Längserstreckung (4) zwei Biegewangen (6) angeordnet sind,
welche Biegewangen (6) jeweils in einer Aufnahme (14) des Grundkörpers (2) gehalten sind und um eine, zur Längserstreckung (4) parallelen Achse (7), zwischen einer Ruhe- und einer Arbeitsposition verschwenkbar sind,
wobei ferner jede Biegewange eine Anlegefläche (8) aufweist, welche in der Arbeitsposition mit einem Wandabschnitt der Gesenkausnehmung (5) eine Gesenk-Anlegefläche (8) ausbildet,
wobei ferner zwischen jeder Biegewange (6) und dem Grundkörper (2) zumindest ein vorgespanntes Federelement (10) angeordnet ist, wodurch die Biegewange in der Ruheposition gehalten ist und aus der Arbeitsposition selbsttätig in die Ruheposition zurückschwenkt, **dadurch gekennzeichnet, dass**
das Federelement (10) eine Induktivität ausbildet, welche Induktivität in einem elektrischen Schaltkreis angeordnet ist, welcher elektrische Schaltkreis (11) mit einer Auswerteschaltung (12) verbunden ist, welche Auswerteschaltung (12) aus einer Änderung des Werts der Induktivität, eine Winkeländerung bildet.

2. Unterwerkzeug nach Anspruch 1, **dadurch gekennzeichnet, dass** die Induktivität als Luftspule oder als Kernspule ausgebildet ist.

3. Unterwerkzeug nach Anspruch 1 oder 2, **dadurch gekennzeichnet, dass** mehrere Federelemente (10) je Biegewange vorhanden sind, wobei die Induktivitäten der Federelemente (10) in Serie geschaltet sind.

4. Unterwerkzeug nach einem der Ansprüche 1 bis 3, **dadurch gekennzeichnet, dass** der elektrische Schaltkreis (11) eine Wechselspannungsquelle oder Wechselstromquelle für sinusförmige oder für rechteckförmige Spannung bzw. Strom aufweist.

5. Unterwerkzeug nach Anspruch 4, **dadurch gekennzeichnet, dass** die Auswerteschaltung (12) eine Diskriminatorschaltung, insbesondere einen Fensterdiskriminator oder einen Phasendiskriminator, aufweist.

6. Unterwerkzeug nach Anspruch 4, **dadurch gekennzeichnet, dass** die Wechselspannungsquelle in der Frequenz der sinusförmigen Spannungen durchstimmbar ist.

7. Unterwerkzeug nach einem der Ansprüche 1 bis 6, **dadurch gekennzeichnet, dass** das Federelement (10) gegen den Grundkörper (2) und/oder gegen die Biegewange elektrisch isoliert ausgebildet ist.

8. Unterwerkzeug nach einem der Ansprüche 2 bis 7, **dadurch gekennzeichnet, dass** das Federelement (10) elektrisch isolierend ausgebildet ist.

9. Unterwerkzeug nach einem der Ansprüche 1 bis 8, **dadurch gekennzeichnet, dass** das Federelement (10) von einem magnetischen Schirmelement umgeben ist.

10. Unterwerkzeug nach Anspruch 2, **dadurch gekennzeichnet, dass** am Grundkörper (2) ein Umlenkmechanismus vorhanden ist, der die Verschwenkbewegung der Biegewange in eine Bewegung des Kerns in der Kernspule umsetzt.

## Claims

1. A lower tool (1) of a bending press with a bend angle measuring apparatus,
wherein the lower tool (1) has a longitudinally extended base body (2) with a machine receptor (3), and wherein a die recess (5) is arranged in the longitudinal extent (4) of the basic body (2) and located opposite to the machine receptor (3),
wherein furthermore two bending cheeks (6) are arranged in the longitudinal extent (4), which bending cheeks (6) are each held in a receptor (14) of the base body (2), and can be pivoted about an axis (7) parallel to the longitudinal extent (4), between a standby position and an operative position,
wherein furthermore each bending cheek has a contact surface (8), which in the operative position forms a die contact surface (8) with a wall section of the die recess (5),
wherein furthermore at least one pre-loaded spring element (10) is arranged between each bending cheek (6) and the base body (2), whereby the bending cheek is held in the standby position, and automatically pivots back out of the operative position into the standby position,
**characterised in that**
the spring element (10) forms an inductance, which inductance is arranged in an electrical circuit, which electrical circuit (11) is connected to an evaluation circuit (12), which evaluation circuit (12) forms an angle alteration from an alteration in the value of the inductance.

2. The lower tool in accordance with claim 1, **characterised in that** the inductance is designed as an air coil or as a core coil.

3. The lower tool in accordance with claim 1 or 2, **characterised in that** a plurality of spring elements (10) are present in each bending cheek, wherein the inductances of the spring elements (10) are connected in series.

4. The lower tool in accordance with one of the claims 1 to 3, **characterised in that** the electrical circuit (11) has an alternating voltage source or alternating current source for sinusoidal or rectangular voltage or current.

5. The lower tool in accordance with claim 4, **characterised in that** the evaluation circuit (12) has a discriminator circuit, in particular a window discriminator or a phase discriminator.

6. The lower tool in accordance with claim 4, **characterised in that** the alternating voltage source can be tuned to the frequency of the sinusoidal voltages.

7. The lower tool in accordance with one of the claims 1 to 6, **characterised in that** the spring element (10) is designed to be electrically insulated from the base body (2) and/or from the bending cheek.

8. The lower tool in accordance with one of the claims 2 to 7, **characterised in that** the spring element (10) is designed to be electrically insulating.

9. The lower tool in accordance with one of the claims 1 to 8, **characterised in that** the spring element (10) is surrounded by a magnetic shielding element.

10. The lower tool in accordance with claim 2, **characterised in that** a deflection mechanism is present on the base body (2), which converts the pivotal movement of the bending cheek into a movement of the core in the core coil.

## Revendications

1. Outil inférieur (1) d'une presse plieuse, avec un dispositif de mesure d'angle de pliage, l'outil inférieur (1) comprenant un corps de base allongé (2) avec un logement de machine (3) et, dans l'extension longitudinale (4) à du corps de base (2) et en face du logement de machine (3), un évidement de matrice (5) étant disposé,
en outre, dans l'extension longitudinale (4), deux joues de pliage (6) étant disposées, ces joues de pliage (6) étant maintenues chacune dans un logement (14) du corps de base (2) et étant pivotantes autour d'un axe (7) parallèle à l'extension longitudinale (4), entre une position de repos et une position de travail,
en outre chaque joue de pliage comprenant une surface d'appui (8) qui forme, dans la position de travail, avec une portion de paroi de l'évidement de matrice (5), une surface d'appui de matrice (8),
en outre, entre chaque joue de pliage (6) et le corps de base (2), au moins un élément à ressort précontraint (10) étant disposé, qui permet de maintenir la joue de pliage dans la position de repos et de la pivoter à nouveau automatique de la position de travail vers la position de repos,
**caractérisé en ce que**
l'élément à ressort (10) formant une inductance, cette inductance étant disposée dans un circuit électrique, ce circuit électrique (11) étant relié avec un circuit d'analyse (12), ce circuit d'analyse (12) générant une variation d'angle à partir d'une variation de la valeur de l'inductance.

2. Outil inférieur selon la revendication 1, **caractérisé en ce que** l'inductance est formée comme une bobine à air ou comme une bobine à noyau.

3. Outil inférieur selon la revendication 1 ou 2, **caractérisé en ce que** plusieurs éléments à ressorts (10) sont prévus par joue de pliage, les inductances des éléments à ressorts (10) étant branchées en série.

4. Outil inférieur selon l'une des revendications 1 à 3, **caractérisé en ce que** le circuit électrique (11) comprend une source de tension alternative ou une source de courant alternatif pour une tension ou un courant sinusoïdal ou rectangulaire.

5. Outil inférieur selon la revendication 4, **caractérisé en ce que** le circuit d'analyse (12) comprend un circuit discriminateur, plus particulièrement un discriminateur de fenêtre ou un discriminateur de phase.

6. Outil inférieur selon la revendication 4, **caractérisé en ce que** la source de tension alternative est accordable dans la fréquence des tensions sinusoïdales.

7. Outil inférieur selon l'une des revendications 1 à 6, **caractérisé en ce que** l'élément à ressort (10) est conçu de façon à être électriquement isolé par rapport au corps de base (2) et/ou à la joue de pliage.

8. Outil inférieur selon l'une des revendications 2 à 7, **caractérisé en ce que** l'élément à ressort (10) est conçu de façon à être électriquement isolant.

9. Outil inférieur selon l'une des revendications 1 à 8, **caractérisé en ce que** l'élément à ressort (10) est entouré d'un élément de blindage magnétique.

10. Outil inférieur selon la revendication 2, **caractérisé en ce que**, sur le corps de base (2), se trouve un mécanisme de renvoi qui convertit le mouvement de pivotement de la joue de pliage en un mouvement du noyau dans la bobine à noyau.
